# EUROPEAN PATENT APPLICATION

(11) **EP 4 653 938 A1**
(43) Date of publication of application: **26.11.2025**
(21) Application number: 25170621.4
(22) Date of filing: 15.04.2025
(51) Int. Cl.: G02C 5/14, G02C 5/22, G02C 11/00

(54) **HINGE AND EYEWEAR APPARATUS**

(30) Priority: 23.05.2024 FI 20245661
(71) Applicant: Pixieray Oy, 02630 Espoo (FI)
(72) Inventor: Huittinen, Otto, 01680 Vantaa (FI); Timonen, Juha, 02700 Kauniainen (FI); Iseri, Semih, 00200 Helsinki (FI); Selby, Tapio, 06750 Tolkkinen (FI)
(74) Representative: Moosedog Oy

(57) **Abstract**

Disclosed is a hinge (100) comprising: a first hinge part (102) having a first end (104A) and a second end (104B); a second hinge part (106) having a third end (108A) and a fourth end (108B); a connecting member (110) for connecting the first hinge part and the second hinge part for providing first rotation point to allow rotation of the first hinge part with respect to the second hinge part; a first electrical connector (112) at the first end and a second electrical connector (114) at the fourth end, an electrical conductor (116) passing through the first hinge part and the second hinge part for connecting the first electrical connector to the second electrical connector; and a sealing (118) arranged at least at the first end, wherein the sealing is compressed in at least one of: an axial direction, a radial direction.

## Description

### TECHNICAL FIELD

The present disclosure relates to hinges. Moreover, the present disclosure relates to eyewear apparatuses.

### BACKGROUND

In recent times, smart eye wear has become increasingly popular due to its multifunctionality, incorporating features such as augmented reality displays, wireless connectivity, and various sensors. Typically, the smart eye wear has electrical components and/or a power source embedded within at least a temple of the smart eyewear. However, this integration presents challenges in terms of space constraints, durability, and reliability. Therefore, there is a focus on developing technologies that enhance such integration of the electrical components and/or a power source while overcoming said challenges.

However, existing smart eye wear is associated with several limitations. It will be appreciated that when the electrical components and/or the power source are also embedded within the frame of the smart eyewear, electrical connections are required to be established between the temple and the frame. Typically, such electrical connections are established through a hinge of the smart eyewear. Firstly, the hinge is provided with an existing connector (i.e., a Universal Serial Bus connector) to establish the electrical connections. However, a size of the existing connector is greater than a size of the temple, which affects compactness of the smart eyewear. Hence, this impacts overall design, comfort, and durability, of the smart eyewear. Moreover, small particles can get inside the hinge, as movement of the hinge is not typically perpendicular to the connector. This can cause wear and corrosion of the electrical connection. Secondly, the hinge is provided with a flexible printed circuit board (PCB) therethrough. However, the flexible PCB is required to be permanently attached from the temple or the frame before assembling the smart eyewear, which is difficult to manufacture. Moreover, when using the existing connector or the flexible PCB in the hinge of the smart eyewear, it is still required to waterproof and protect the hinge from moving elements.

Therefore, in light of the foregoing discussion, there exists a need to overcome the aforementioned drawbacks.

### SUM MARY

The aim of the present disclosure is to provide hinges and eyewear apparatuses to facilitate a seamless and reliable electrical connection between a temple and a frame of an eyewear apparatus. The aim of the present disclosure is achieved by a hinge and an eyewear apparatus as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates a schematic illustration of a hinge, in accordance with an embodiment of the present disclosure;
FIGs. 2A and 2B illustrate top views of an eyewear apparatus that uses a hinge of FIG. 1, in accordance with an embodiment of the present disclosure;
FIGs. 3A and 3B collectively illustrate sectional views of a portion of an eyewear apparatus of FIGs. 2A-B, in accordance with an embodiment of the present disclosure;
FIG. 4A shows an internal view of a frame comprised in an eyewear apparatus of FIG. 2A, and FIG. 4B shows a first temple comprised in the eyewear apparatus of FIG. 2A, in accordance with an embodiment of the present disclosure; and
FIGs. 5A, 5B, and 5C show various views of an eyewear apparatus of FIG.2A, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a hinge comprising:
a first hinge part having a first end and a second end;
a second hinge part having a third end and a fourth end;
a connecting member for connecting the first hinge part and second hinge part for providing a first rotation point to allow rotation of the first hinge part with respect to the second hinge part;
a first electrical connector at the first end and a second electrical connector at the fourth end;
an electrical conductor passing through the first hinge part and second hinge part for connecting the first electrical connector to the second electrical connector; and
a sealing arranged at least at the first end, wherein the sealing is compressed in at least one of: an axial direction, a radial direction.

The present disclosure provides an aforementioned hinge to provide modular electrical connections. Herein, the first electrical connector, the second electrical connector, and the electrical conductor are provided within the hinge to establish electrical connections. Herein, the hinge is divided into the first hinge part and the second hinge part to reduce a wear and corrosion of the electrical conductor that passes through the first hinge part and the second hinge part. Such wear and corrosion are reduced due to the connecting member, which enables controlled and smooth rotation of the first hinge part relative to the second hinge part. Moreover, the sealing arranged at the first end of the hinge provides effective waterproofing and protection for the electrical connections. This safeguards the electrical connections from environmental factors such as water, dust, and other small particles, thus ensuring a durability of the hinge. Furthermore, the sealing is compressed in at least one of: the axial direction, the radial direction, to minimize or eliminate any potential gap at the first end, which provides an effective sealing action. The hinge is designed in such a manner that a manufacturing process as well as an assembly process are simplified, hence reducing production time and costs. Additionally, the hinge is modular in nature, which allows for removably attachment when utilised in an eyewear apparatus.

In a second aspect, the present disclosure provides a provides an eyewear apparatus comprising:
a frame;
a first temple;
a first hinge;
at least one electrical component embedded in the frame; and a power source embedded in the first temple;
wherein the first hinge connects the first temple to the frame and provides electrical connection between the electrical component and the power source.

The present disclosure provides an aforementioned eyewear apparatus that provides modular electrical connections therewithin, facilitating a seamless and efficient manner of powering smart eyewear functionalities. Such modular electrical connections simplify a connection of the first temple and the frame to each other in the eyewear apparatus. Moreover, such modularity comes from ease of removably attaching the first temple from the frame, or vice-versa, via the first hinge. Moreover, embedding the at least one electrical component within the frame, and the power source within the first temple, a streamlined design of the eyewear apparatus is achieved. Herein, such streamlined design makes the eyewear apparatus compact. Moreover, the electrical connection that is provided between the electrical component and the power source through the first hinge ensures a reliable power supply and functioning of the eyewear apparatus. This minimizes a risk of electrical interruptions or failures, which enhances an overall reliability of the eyewear apparatus.

Throughout the present disclosure, the term *"hinge"* refers to a mechanical component that is utilized in an eyewear apparatus, wherein the hinge facilitates rotational movement therewith. Herein, the eyewear apparatus comprises a temple and a frame, wherein the hinge is connected between the temple and the frame. This rotational movement of the hinge allows for opening and closing of the temple relative to the frame, enabling a user to comfortably wear or remove the eyewear. Herein, the hinge functions as a conduit for electrical connectivity. This means that the hinge also provides a pathway for an electrical signal to pass between at least one electrical component (as described later) in the frame and the power source in the temple. Hence, the hinge provides seamless integration of electrical functionalities within the eyewear apparatus while maintaining its mechanical functionality.

Throughout the present disclosure, the term *"hinge part"* refers to a specific component of the hinge that is situated at one end of the hinge, that is to be removably attached to any one of: the frame, the temple, of the eyewear apparatus. Optionally, the first hinge part is an elongate structure, wherein the first hinge part is designed to provide stability and support to the hinge. Typically, the first hinge part is constructed from durable materials to withstand strain or stress from regular use of the eyewear apparatus. Examples of such durable materials may include, but are not limited to, metal, plastic, composite materials such as a carbon fibre.

Moreover, the first hinge part has the first end and the second end that is opposite to the first end. Herein, the first end and the second end are at extremities of the first hinge part. The first end of the first hinge part is positioned in proximity to any one of extreme left or extreme right of the frame of the eyewear apparatus, wherein the first end is removably attached to said frame. The second end of the second hinge part is in proximity to the first hinge part, and is connected to the second hinge part via the connection member (as will be described later). Such removable attachment ensures a stability and functionality of the hinge by allowing the first hinge part to pivot around this first end, thereby facilitating the rotational movement of the first hinge part relative to said frame. The first hinge part is secured to the second hinge part through the second end, thus enabling the rotational movement of the first hinge part relative to the second hinge part.

Throughout the present disclosure, the term *"second hinge part"* refers to another specific component of the hinge, located at the opposite end of the hinge from the first hinge part and is connected to the temple. Optionally, the second hinge part is an elongate structure, wherein the second hinge part is designed to provide stability and support to the hinge. Typically, the second hinge part is constructed from durable materials to withstand strain or stress from regular use of the eyewear apparatus. Examples of such durable materials may include, but are not limited to, metal, plastic, composite materials such as carbon fibre.

Moreover, the second hinge part has the third end and the fourth end that is opposite to the third end. Herein, the third end and the fourth end are at extremities of the second hinge part. The third end of the second hinge part is positioned in proximity to any one of extreme left or extreme right of the first hinge part of the eyewear apparatus. The fourth end of the second hinge part is in removable connection to the temple, such removable attachment ensures a stability and functionality of the hinge by allowing the second hinge part to pivot around this fourth end, thereby facilitating the rotational movement of the second hinge part relative to the temple. The second hinge part is secured to the first hinge part through the third end, thus enabling the rotational movement of the second hinge part relative to the first hinge part.

Throughout the present disclosure, the term *"connecting member"* refers to a structural component that links and joins together the first hinge part and the second hinge part. The term *"rotation point"* refers to a particular location around which the first hinge part rotates relative to the second hinge part. This first rotation point is established by the connecting member, which physically connects the first hinge part to the second hinge part. Herein, the connecting member facilitates the rotational movement between the first hinge part and the second hinge part, enabling the temple to open and close relative to the frame. Structurally, the connecting member may take various forms, depending on the design and configuration of the hinge. In this regard, the connecting member is capable of securely connecting the first hinge part to the second hinge part while enabling rotational movement. Moreover, the connecting member ensures proper alignment and coordination between the first hinge part and the second hinge part, providing a stable and reliable connection that facilitates for smooth and controlled motion of the temple. The presence of the connecting member establishes an axis of rotation, around which the first hinge part rotates relative to the second hinge part. This axis of rotation allows rotational movement between the first hinge part and the second hinge part. Optionally, the connecting member also provides a second rotation point to allow rotation of the first hinge part with respect to the second hinge part. Examples of various forms of the connecting member may include, but are not limited to, a pin, a rod, and a bar etc.

Throughout the present disclosure, the term *"electrical connector"* refers to an electrical contact point that serves as an interface for establishing electrical connections between the frame and the temple via the hinge. Herein, the first electrical connector is located at the first end of the first hinge part, and the second electrical connector is located at the fourth end of the second hinge part. In this regard, the presence of the first electrical connector and the second electrical connector within the first hinge part and the second hinge part enables integration of the at least one electrical component into the eyewear apparatus. Moreover, the first electrical connector and the second electrical connector facilitate transmission of electrical signals or power between the frame and the temple, via the hinge. Herin, the electrical connection between the frame and the temple via the hinge is made with galvanic contact to the frame. The galvanic contact indicates that the electrical connection is established through direct metal-to-metal contact between the electrical connector and the frame via the hinge. This type of connection relies on physical contact between conductive surfaces to ensure a secure electrical pathway. In an example, at the frame side there is needed bare printed circuit pads or other conductive pads, whereas at the hinge side there are c-clips mounted on flexible circuit board, but the contacts could be also pogo pins, solid pads or similar.

Hence, by facilitating the transmission of the electrical signals or power between the temple and the frame, the first electrical connector and the second electrical connector enable functionalities, for example, such as data transfer, power supply to embedded sensors or displays, or communication with external devices. Additionally, the inclusion of the first and the second electrical connector within the hinge adds versatility and adaptability to the design, facilitating customization and integration of various electrical components based on requirements of the user. Examples of the first electrical connector and the second electrical connector may comprise, but are not limited to, pogo pins, sockets, solid pads, or terminals, designed to facilitate the transmission of the electrical signals or power.

Throughout the present disclosure, the term *"electrical conductor"* refers to a component that allows a flow of electrical current between the first electrical connector and the second electrical connector. Typically, the first electrical conductor is made of metal wires, conductive traces, or flexible cables, that is within the first hinge part and the second hinge part within the hinge of the eyewear apparatus. The electrical conductor may be insulated to prevent interference or damage from external factors. The electrical conductor provides a secure pathway for transmitting the electrical signals or power between the first electrical connector and the second electrical connector, hence minimizing a risk of signal loss, interference, or breakage. This enhances the overall reliability and durability of the electrical conductor in the eyewear apparatus, reducing the need for maintenance or repairs.

Throughout the present disclosure, the term *"sealing"* refers to a barrier that prevents any contaminant (for example, dust particles, moisture, debris) into the hinge. Herein, a red gasket serves the sealing that ensures a secure and watertight barrier, safeguarding internal components of the hinge from the contaminants. Notably, the red gasket refers to a protective sealing component that surrounds the electrical contacts. The red gasket is typically made of a flexible, durable material that is colored red for visibility or identification. Such safeguarding contributes to a durability, and reliability of the hinge, thereby enhancing a performance of the eyewear apparatus. Typically, the sealing is arranged at the first end of the first hinge part. In this regard, the sealing is provided in a remaining portion of the first end where the first electrical connector is not arranged. Examples of materials for manufacturing the sealing may be, but are not limited to, a rubber material, a silicone material, a neoprene material, an ethylene propylene diene monomer (EPDM) material, a hot melt adhesive material. Optionally, the sealing is arranged at the fourth end of the second hinge part. Optionally, the sealing is implemented as an O-ring sealing. Optionally, the sealing is implemented as an O-ring sealing with a locking pin.

A technical effect of arranging the sealing in such a manner is that only a minimal space around the first electrical connector is required to be protected, and not a cavity of the frame as a whole where the first end of the first hinge part is connected. Hence, the cavity is able to provide a mechanical support to the hinge.

Moreover, the sealing is compressed in at least the first end, wherein said compression involves applying force to reduce a volume of the material. The compression of the sealing is in at least one of: the axial direction, the radial direction, based on an orientation of force applied during compression. In an instance, the sealing is compressed in the axial direction. Herein, the force is along a length of the sealing material. In another instance, the sealing is compressed in the radial direction. Herein, the force is applied in any one of: inward, outward, from a center of the sealing, perpendicular to a central axis of the sealing. In yet another instance, the sealing is compressed in the axial direction and the radial direction. Herein, the force is applied along the length and any one of: inward, outward, from the center of the sealing.

A technical effect of the hinge comprising the aforementioned components is that said hinge enables both mechanical articulation and electrical connectivity between connected components, thus ensuring a reliable electrical transmission while maintaining structural integrity.

Optionally, the connecting member is a first pin. In this regard, the term *"first pin"* refers to a specific type of the connecting member that is utilized between the first hinge part and the second hinge part. The first pin may be a cylindrical or rod-shaped object, typically made of metal or plastic, that links and joins the first hinge part and the second hinge part. Specifically, the first pin is designed to provide a stable and reliable connection between the first hinge part and the second hinge part to facilitate rotational movement that is controllable in a smooth manner. Notably, the first pin is inserted through corresponding holes in both the first hinge part and the second hinge part, thereby securely joining them together. This configuration establishes the axis of rotation, enabling the first hinge part to rotate relative to the second hinge part, and vice-versa. Such first pins are well-known in the art and are relatively simple to manufacture. Hence, this makes the first pin cost-effective and easy to integrate within the hinge. A technical effect of the first pin being the connecting member is that it facilitates rotational movement and structural integrity in the hinge. Hence, the hinge benefits from a well-defined pivot structure that facilitates smooth rotation while maintaining alignment between the first hinge part and the second hinge part, thus reducing mechanical wear.

Optionally, the hinge further comprises a charging interface. In this regard, the term *"charging interface"* refers to a component integrated within the hinge of the eyewear apparatus, that is specifically designed to facilitate recharging of a power source (for example, such as a battery) of the eyewear apparatus. The charging interface enables transfer of electrical power from an external power source (for example, such as a charging adapter) to the power source. Typically, the charging interface can take various forms depending on the design and functionality requirements of the eyewear apparatus. There are different ways in which the eyewear apparatus can be charged but are not limited to, for example, USB-A, USB-C, lighting, micro-USB etc. These different ways facilitate the seamless connection and transfer of electrical power when using the charging interface, thereby ensuring efficient and reliable recharging of the eyewear apparatus. A technical effect of the hinge comprising the charging interface is that it enables a direct electrical connection for charging purposes through the hinge itself. Beneficially, by integrating the charging interface directly into the hinge, the eyewear apparatus can be recharged without a need for additional accessories or external charging ports, thus simplifying a design of the hinge. Hence, any eyewear apparatus using the hinge can maintain a sleek form factor without comprising on functionality. Additionally, Proper sealing and protection mechanisms can be implemented to ensure that the charging interface remains functional even in challenging environmental conditions. Furthermore, this configuration allows for continuous charging while ensuring the electrical connection between the first hinge part and the second hinge part is maintained. This enhances a convenience of charging the eyewear apparatus, through an integrated and seamless solution, improving user experience and reducing wear on external ports.

Optionally, dimensions of the charging interface are less than dimensions of hinge. This ensures that the charging interface are embedded within the hinge. Moreover, the charging interface is manufactured by various techniques, (for example, such as precision machining, moulding, or assembly techniques) to ensure proper fit and alignment within the hinge. This includes connecting the first hinge part to the second hinge part using the connecting member, such as the first pin, while ensuring that the charging interface is properly positioned at the designated end of the hinge.

A technical effect of incorporating the charging interface within the hinge of the eyewear apparatus is to maintain a power level of the eyewear apparatus, thereby ensuring uninterrupted functionality and a seamless experience of the user.

Optionally, the charging interface is located at the second end or at the third end. In other words, the charging interface is located at the second end of the first hinge part or the third end of the second hinge part. In this regard, positioning the charging interface at the second end or at the third end, makes the charging interface accessible to connect to the power source. This ensures convenient and hassle-free recharging hence enhancing the overall usability of the eyewear apparatus. Moreover, the location of the charging interface ensures compatibility with various charging docks, adapters, or pads. Thereby, the charging interface can be used to recharge the eyewear apparatus using different charging methods or accessories, thereby providing flexibility and versatility. Furthermore, such location reduces a risk of misalignment or damage to the charging interface, ensuring uninterrupted charging Additionally, the location of the charging interface is selected in such a manner that there is efficient use of space within the first hinge part or the second hinge part, thereby facilitating integration of charging functionality without compromising compactness or functionality of the eyewear apparatus.

A technical effect of locating the charging interface at the second end or at the third end is usage of space in an efficient manner, accessibility, design aesthetics, and charging versatility within the eyewear apparatus, thereby enhancing its overall functionality and the experience of the user. Hence, such positioning of the charging interface a the second end or at the third end optimizes accessibility for charging, thus allowing efficient transfer of power without interfering hinge movement.

Optionally, the charging interface is electrically connected to the second electrical connector. In this regard, the charging interface is electrically connected to the second electrical connector, establishing a pathway for a flow of the electrical current between the charging interface and the at least one electrical components of the eyewear apparatus. Herein, a secure electrical connection is established between the charging interface and the second electrical connector which enhances a reliability and a durability of the eyewear apparatus. This minimizes a risk of connectivity issues, electrical shorts, or component failure hence ensuring longevity. The charging interface provides a direct connection to the second electrical connector. Thereby, the direct connection ensures consistent and stable power delivery. Optionally, the charging interface is electrically connected to the electrical conductor.

Herein, the electrical connection between the charging interface and the second electrical connector is established during the manufacturing process of the hinge. This may involve connecting conductive elements, such as wires or traces, from the charging interface to the second electrical connector during assembly of the hinge. Moreover, various techniques may include (for example, such as soldering, crimping, or conductive bonding), to be employed to ensure a secure and reliable electrical connection between the charging interface to the second electrical connector.

A technical effect of the charging interface being electrically connected to the second electrical connector is that there is a seamless and efficient transfer of an electrical power between an external charging source and an internal power source of the eyewear apparatus. Moreover, such electrical connection ensures continuous and efficient power supply, thus improving overall reliability on energy transfer. This ensures rapid and reliable recharging of the eyewear apparatus, minimizing downtime and maximizing convenience of the user.

The present disclosure also relates to the aforementioned second aspect as described above. Various embodiments and variants disclosed above, with respect to the aforementioned first aspect, apply *mutatis mutandis* to the aforementioned second aspect.

Throughout the present disclosure, the term *"eyewear apparatus"* refers to an arrangement of electrical and/or mechanical components that is worn around eyes of the user. Optionally, the eyewear apparatus (practically, a smart eyewear) is employed, for example, to correct a vision disorder, including but not limited to, myopia, hypermetropia, astigmatism, presbyopia and the like, such as, by enabling appropriate refraction, reflection, diffraction or transmission of light towards the eyes of the user wearing the eyewear apparatus. Optionally, the eyewear apparatus is used to provide protection to the eyes of the user from ambient conditions such as sunlight, ultraviolet radiation, blue light associated with computing devices, dust, chemical fumes, and such like. Optionally, the eyewear apparatus enables display of information to the eyes of the user.

Throughout the present disclosure, the term *"frame"* refers to a mechanical component of the eyewear apparatus that acts as a stable base to enable the user to wear the user apparatus around the eyes. Optionally, the frame is fabricated, for example, with cellulose acetate, propionate plastic, nylon-based plastic, polyamide, epoxy resin, carbon fiber, metal, metal alloy and the like. In an example, the frame comprises a left rim corresponding to a left eye of the user and a right rim corresponding to the right eye of the user. Further, the left rim and the right rim are separated by a bridge that is arranged on a nose of the user when the eyewear apparatus is worn by the user. In another example, the frame comprises a single rim having a width equal to or more than a binocular distance of the user.

Throughout the present disclosure, the term *"first temple"* refers to an elongated mechanical or electromechanical component that is disposed at any one of an extreme right or an extreme left of the frame. When the first temple is on the extreme right of the frame, the first temple is received over a right ear of the user, wherein the right ear balances the first temple. When the first temple is on the extreme left of the frame, the first temple is received over a left ear of the user, wherein the left ear balances the first temple.

Throughout the present disclosure, the term *"first hinge"* refers to a mechanical joint or connection point located between the first temple and structure of the frame. Herein, the first hinge comprises both the first hinge part and the second hinge part, which are similar to or different from the first hinge part and the second hinge part of the second hinge. Optionally, the first hinge is the hinge (as defined earlier). Optionally, the eyewear apparatus further comprises a second hinge.

Optionally, the eyewear apparatus further comprises a second temple and a second hinge. In this regard, the term *"second temple"* refers to another elongated mechanical or an electromechanical component that is disposed at another one of the extreme left or the extreme right of the frame. The second temple is arranged on the right ear or the left ear in a manner similar to an arrangement of the first temple. Moreover, the term *"second hinge"* refers to another mechanical joint or connection point located between the second temple and the structure of the frame. Herein, the second hinge also comprises the first hinge part and the second hinge part, which are similar to or different from the first hinge part and the second hinge part of the first hinge. The second hinge functions in a manner similar to a function of the first hinge. Herein, inclusion of the second temple and the second hinge ensures a symmetry in design, thus improving comfort and balance while allowing for similar electrical and mechanical advantages on both sides of the eyewear apparatus. A technical effect of having the first temple and the second temple facilitates stability and weight distribution. Moreover, the second temple and the second hinge provide a symmetrical structure, which enhances both functionality and aesthetics of the eyewear apparatus.

Throughout the present disclosure, the term *"electrical component"* refers to one or more element within an electrical circuit of the frame that performs a specific function related to a manipulation or transmission of the electrical signals. Typically, the at least one electrical component is arranged on the frame of the eyewear apparatus. Examples of the at least one electrical component may include, but is not limited to, a sensor, a microphone, a speaker, a display, a processor, a memory module, and a communication module. The technical effect of incorporating the at least one electrical component is that there is augmentation of capabilities of the eyewear apparatus to offer features such as improvement of vision of the eyes, augmented reality displays, wireless connectivity, or other interactive functionalities.

Throughout the present disclosure, the term *"power source"* refers to a component designed to generate and store electrical energy for subsequent use. The electrical energy is utilized to power and supply electricity to various electronic components integrated into the eyewear apparatus. In this regard, the power source could be at least one battery that interacts with the at least one electrical component of the eyewear apparatus. Herein, the at least one battery is any one of: a single use battery, a rechargeable battery. Typically, by incorporating the at least one battery as the power source, the eyewear apparatus benefits from a reliable and portable energy supply, allowing for extended usage without the need for frequent recharging or external power sources. It will be appreciated that the power source provides a sustained and reliable electrical supply to enable the proper functioning of the at least one electrical component, enhancing the capabilities of the eyewear apparatus beyond basic vision correction. Optionally, the power source is arranged on the first temple. Alternatively, the power source is arranged on the second temple.

Advantageously, by integrating the power source within the first temple, the eyewear apparatus achieves a compact and streamlined design, minimizing the need for the external power source. Said arrangement enhances the overall efficiency and portability of the eyewear apparatus, making the eyewear apparatus suitable for various applications where space and convenience are of importance.

The first hinge establishes an electrical pathway between the power source in the first temple and the at least one electrical component embedded in the frame hence facilitating the transmission of electrical signal or power. This integration reduces complexity and also enhances the overall reliability and efficiency of the eyewear apparatus. In this regard, a direct electrical connection is provided between the power source and the at least one electrical component. Such provision of the direct electrical connection ensures seamless operation and performance of the eyewear apparatus.

A technical effect of the eyewear apparatus integrating the first hinge is that it provides structural articulation and also enables electrical connection between the power source and the at least one electrical component in the frame.

A technical effect of incorporating the hinge as described in the first aspect, ensures that the eyewear apparatus benefits from mechanical integration and electrical integration, thus improving overall efficiency of the eyewear apparatus, and reducing a complexity of internal wiring.

Optionally, the frame comprises a first cavity for receiving the first end of the first hinge part to removably connect the first hinge part to the frame and wherein a first receiving connector is arranged in the first cavity to electrically connect the first electrical connector to the electrical component. In this regard, the term " *cavity"* refers to a hollow space within the frame of the eyewear apparatus. Herein, the first cavity is specifically designed to accommodate and interact with the first end of the first hinge part. Typically, the first cavity serves as a structural feature intended for the removable connection of the first hinge part to the frame. Moreover, the first cavity provides a mechanical support in the frame. Herein, the term *"first receiving connector"* refers to a component located within the first cavity of the eyewear apparatus, designed to establish an electrical connection with the first electrical connector of the first hinge part. The first receiving connector is configured to securely engage with the first electrical connector of the first hinge part, ensuring reliable connectivity while allowing for easy detachment and re-attachment of the first temple to the frame. This arrangement enables seamless integration of smart technology features and enhances the modularity and serviceability of the eyewear apparatus.

Beneficially, incorporating the first cavity within the frame to receive the first end of the first hinge part, the eyewear apparatus achieves modularity in its design. This allows for the first temple to be easily removably attached from the frame hence facilitating maintenance, repairs, or customization. Thereby, such removable attachment between the first hinge part and the frame enhances serviceability, enabling swift replacements or upgrades without necessitating extensive disassembly of entire eyewear apparatus. Furthermore, a presence of the first receiving connector within the first cavity enables seamless electrical connection between the first electrical connector of the first hinge part and the electrical component embedded in the frame. This facilitates the integration of smart technology features, such as sensors or communication modules, into the eyewear apparatus. Hence, the electrical connectivity ensures efficient transmission of the electrical signals or power, enabling the eyewear apparatus to perform its intended functions effectively. Moreover, the eyewear apparatus can be customized or upgraded to incorporate new features or new functionalities as required. This seamless integration of smart technology features ensures smooth operation and interaction with the eyewear apparatus, thus providing the user with a convenient and satisfactory experience. It will be appreciated that the integration of the first receiving connector into the frame structure enhances the overall durability and reliability of the eyewear apparatus.

Optionally, the first cavity is manufactured to accommodate different hinge types or different hinge sizes. In this regard, during the manufacturing process of the eyewear apparatus, the frame undergoes precision machining, molding (for example, such as injection molding), or similar techniques to create the first cavity. For example, in injection molding, a mold is designed to include the first cavity shape within the frame structure. Once the frame is formed, the first end of the first hinge part is inserted into the first cavity hence creating a secure and removable connection between the first temple and the frame.

A technical effect of integrating the first cavity and the first receiving connector into the frame of the eyewear apparatus enables a design flexibility, allowing for seamless integration of smart technology features and customization options. Moreover, the first cavity in the frame enables a secure yet removable connection of the first hinge part to the frame while ensuring proper electrical contact through the first receiving connector, thus facilitating ease of assembly and maintenance.

Optionally, the first temple comprises a second cavity for receiving the fourth end of the second hinge part to removably connect the second hinge part to the first temple and wherein a second receiving connector is arranged in the second cavity to electrically connect the second connector to the power source. The second cavity is specifically designed to accommodate and interact with the fourth end of the second hinge part. Typically, the second cavity allows for the secure attachment of the second hinge part to the first temple while providing a removable connection hence enhancing modularity and serviceability of the eyewear apparatus. Moreover, the second cavity also provides a mechanical support in the frame. Herein, the term *"second receiving connector"* refers to a component located within the second cavity of the eyewear apparatus, designed to establish the electrical connection with the second electrical connector of the power source. Notably, the second receiving connector facilitates the seamless transmission of power between the first temple and the hinge, enabling efficient operation of embedded electrical components, such as batteries or charging circuits, within the temple.

Herein, incorporating the second cavity within the first temple, the eyewear apparatus achieves modularity in its design. This allows for the first temple to be easily removably attached from the frame hence facilitating maintenance, repairs, or customization. Moreover, the presence of the second cavity enables a modular design approach, allowing for the interchangeability of components of the first temple. This modularity enhances customization options, as the user can swap out the first temple with different features or designs to suit their preferences. Thereby, such removable attachment between the second hinge part and the first temple enhances serviceability, enabling swift replacements or upgrades without necessitating extensive disassembly of entire eyewear apparatus. Furthermore, a presence of the second receiving connector within the second cavity enables seamless electrical connection between the second electrical connector of the second hinge part and the power source embedded in the first temple. Hence, the electrical connectivity ensures efficient transmission of the electrical signals or power, enabling the eyewear apparatus to perform its intended functions effectively. It will be appreciated that the integration of the second receiving connector within the second cavity enhances the overall durability and reliability of the eyewear apparatus.

A technical effect of integrating the second cavity and the second receiving connector into the first temple of the eyewear apparatus enables a design flexibility, allowing for seamless transmission of the power between the first temple and the hinge. Moreover, the second cavity in the temple allows for removable connection of the second hinge part while ensuring a stable electrical connection between the power source and the first hinge, thus contributing to modularity and ease of repair.

It will be appreciated that the sealing is arranged at least at the first end of first hinge part and at least the fourth end of the second hinge part, as described earlier. The sealing is arranged in such a manner that the first cavity and the second cavity are water-tight. Optionally, the sealing is arranged also the second end of the first hinge part, and the third end of the second hinge part.

Optionally, the first receiving connector or the second receiving connector is at the bottom of the first cavity or the second cavity. In other words, the first receiving connector is at the bottom of the first cavity, and the second receiving connector is at the bottom of the second cavity. In this regard, such placement of the first receiving connector or the second receiving connector ensures a secure electrical connection between the hinge and the at least one electrical component embedded in the frame. Additionally, this placement helps in maintaining aesthetics of the eyewear apparatus, as the first and the second receiving connectors are hidden from view when the eyewear apparatus is worn. This placement also minimizes a risk of damage or interference with the first receiving connector or the second receiving connector during use. In an example, if the eyewear apparatus is accidentally dropped or bumped, the first receiving connector or the second receiving connector are less likely to be affected since they are positioned away from the edges or openings of the first cavity or the second cavity. Furthermore, this positioning of the first receiving connector or the second receiving connector allows for easy maintenance of the eyewear apparatus. The first and the second receiving connectors are accessible for inspection, repair, or replacement, if required. This ensures that the eyewear apparatus can be quickly and effectively serviced without requiring extensive disassembly or specialized tools. Overall, this placement enhances the durability, functionality, and the user experience of the eyewear apparatus.

Herein, during the manufacturing process of the eyewear apparatus, the first cavity or the second cavity are designed and formed in the frame and the first temple, respectively. Then, the first receiving connector or the second receiving connector are positioned at the bottom of these cavities, typically using securing methods (for example, such as an adhesive) to hold them in place. This placement ensures that the first receiving connector or the second receiving connector are in close proximity to the at least one electrical component, facilitating efficient electrical transmission.

A technical effect of placing the first receiving connector or the second receiving connector in such a manner is that there is enhanced protection and stability of the electrical connections. Beneficially, such an arrangement enhances contact stability and alignment, thus minimizing electrical resistance and improving connection reliability.

Optionally, the crosscut of the first cavity or the second cavity is one of the following: triangle, square, rectangle, pentagon, hexagon. Herein, the following: triangle, square, rectangle, pentagon, hexagon, are different shapes of the crosscut. In this regard, a purpose of specifying the shape of the crosscut of the first cavity or the second cavity is to provide flexibility in design while ensuring compatibility with various configurations of the hinge. Different shapes offer distinct advantages in terms of stability, alignment, and aesthetics, allowing manufacturers to adjust the eyewear apparatus to meet specific design requirements and preferences of the user. Thereby, selecting an appropriate shape can ensure a snug fit of the eyewear apparatus. This minimizes a movement and improves an overall stability between the first temple and the frame. Moreover, different shapes could be used for customizing the eyewear apparatus, wherein such customization may in a form of different style or an intended application of the eyewear apparatus. This customization facilitates product differentiation and market segmentation. Additionally, the selected shapes could provide comfort to the user. For example, rounded edges in the square or rectangular cavities can prevent discomfort or irritation against the skin of the user. Overall, this specification contributes to the durability, functionality, and visual appeal of the eyewear apparatus, ensuring a high-quality experience.

In this regard, during the manufacturing process, the crosscut of the first cavity or the second cavity are machined, molded, or formed to have the desired geometric shapes such as the triangle, the square, the rectangle, the pentagon, or the hexagon.

A technical effect of specifying the shape of the crosscut of the first cavity or the second cavity in the eyewear apparatus is the enhancement of mechanical stability and precision alignment. Moreover, such shape of the crosscut of the first cavity or the second cavity in the eyewear apparatus improves mechanical interlocking, thus ensuring a firm fit and preventing unintended rotation or displacement of the first hinge part and/or the second hinge part.

Optionally, the depth (D) of the first cavity is 50 - 90% of the length (L) of the first hinge part. In this regard, the depth (D) of the first cavity lies in the range from 50, 51, 53, 55, 60, 65, 75, or 85 percent up to 56, 62, 70, 80, 85, 87, 89 or 90 percent of the length of the first hinge part. Herein, this ensures that a snug and secure fit is provided between the first hinge part and the frame. This helps to prevent unwanted movement or loosening of the first hinge part over time hence enhancing the overall stability of the eyewear apparatus. Beneficially, when the depth of the first cavity is appropriate with respect to the length of the first hinge part, reduces strain on the first hinge part during normal use hence prolonging the service life of the eyewear apparatus. Herein, when minimizing such unwanted movement, the eyewear apparatus is less prone to premature wear and tear, thus ensuring longevity of the eyewear apparatus. Advantageously, defining a depth-to-length ratio simplifies the manufacturing process of the eyewear apparatus, since such depth-to-length ratio provides clear guidelines for dimensions of the first cavity. This allows for consistent production across different eyewear models hence optimizing efficiency and quality control in manufacturing operations.

A technical of specifying the depth with respect the length of the first hinge part in such a manner is that it ensures stability of the hinge within the frame, reducing any risk of loosening or detachment. Furthermore, such specification of the depth enhances the overall form factor of the eyewear apparatus.

Optionally, there is a locking mechanism for the removable connection. In this regard, the term *"locking mechanism"* refers to a device or mechanism designed to securely attach and hold together the first temple and the frame of the eyewear apparatus. The locking mechanism ensures a stable and reliable connection between the first temple and the frame while allowing for easy detachment when necessary, such as for maintenance or customization purposes. Typically, the locking mechanism may include various components such as clips (for example, such as c-clips), clasps, or pins, which engage with corresponding features on the first temple and the frame to provide a secure grip. The locking mechanism ensures that the first temple remains securely attached to the frame during regular wear, prevents potential accidents or prevents any physical discomfort for the user. Additionally, the locking mechanism facilitates convenient maintenance and customization of the eyewear apparatus, facilitating easy replacement or adjustment of components as needed. A technical effect of incorporating the locking mechanism is that it ensures that the eyewear apparatus stays securely in place for any length of time. Such incorporation prevents unintended detachment while allowing for easy disassembly, when required.

Optionally, the locking mechanism is a clip-locking mechanism, comprising at least one locking clip and receiving cavity in the frame for receiving the locking clip to lock the first temple to the frame. In this regard, the term *"clip-locking mechanism"* refers to a configuration designed to secure the connection between the first temple and the frame of the eyewear apparatus. Herein, the term *"locking clip"* refers to a component that is integrated into either the first temple or the frame of the eyewear apparatus. The at least one locking clip is utilized to securely hold the first temple in place by engaging with a corresponding receiving cavity. Thereby, the at least one locking clip ensures a stable connection between the first temple and the frame, preventing accidental detachment during wear.

Herein, the first temple is locked to the frame by the at least one locking clip by aligning the first temple with the frame. Herein, the at least one locking clip on the first temple engages with the receiving cavity in the frame. This engagement creates a secure attachment between the first temple and the frame, effectively locking them together. The at least one locking clip may feature a protruding or hook-like structure that fits snugly into the receiving cavity, ensuring a tight and stable connection. Herein, by utilizing the at least one locking clip and the receiving cavity in the frame, the clip-locking mechanism provides a reliable means of attachment that prevents the first temple from dislodging during activities or movements. This promotes a comfortable and secure wearing experience for the user. Additionally, the clip-locking mechanism offers ease of use and convenience, allowing for quick and straightforward attachment and removal of the first temple as needed for maintenance or customization purposes. Overall, this feature contributes to the durability, usability, and the user satisfaction of the eyewear apparatus. Examples of the clip-locking mechanisms may include, but are not limited to, snap-in clips, hook-and-latch clips, magnetic clips and slide-in clips.

A technical effect of integrating the clip-locking mechanism in the eyewear apparatus is that the first temple remains firmly attached to the frame during wear, which prevents accidental detachment upon wearing. A technical effect of the clip-locking mechanism comprising at least one locking clip and receiving cavity ensures a robust and tool-free attachment of the temple to the frame, thus improving user convenience and assembly efficiency.

It will be appreciated that the sealing is used at least at the first end of the first hinge part, as it is difficult to make the first cavity watertight. This difficulty arises due to the locking clip, which is required to stay outside an area of the eyewear apparatus that is sealed with the sealing. Hence, the sealing is arranged in a manner as described in the first aspect.

Optionally, the locking mechanism comprises a second pin and a first hole in the second hinge part and a second hole in the first temple for receiving the second pin to lock the first temple to the second hinge part.

In this regard, the term *"second pin"* refers to a specific type of the connecting member that is utilized within the second hinge part of the eyewear apparatus. The second pin may be the cylindrical or the rod-shaped object, typically made of metal or plastic, that locks the first temple to the second hinge part. Herein, the term *"first hole"* refers to a void or opening in the second hinge part of the eyewear apparatus. The first hole is specifically designed to receive the second pin when the first temple is aligned with the second hinge part, allowing for a secure attachment. Typically, the first hole is sized and shaped to accommodate the diameter and configuration of the second pin, ensuring a snug fit and reliable connection. The term *"second hole"* refers to a void or opening in the first temple of the eyewear apparatus. The second hole is specifically designed to receive the second pin when the first temple is aligned with the hinge part, allowing for a secure attachment. Similar to the first hole, the second hole is typically sized and shaped to accommodate the diameter and configuration of the second pin, ensuring the snug fit and reliable connection.

In this regard, to lock the first temple to the second hinge part in the eyewear apparatus, the second pin is aligned with and inserted into the first hole located in the second hinge part. Simultaneously, the second pin is inserted into the second hole in the first temple. This insertion action securely fastens the first temple to the second hinge part, ensuring a stable connection. Thereby, the second pin fits snugly into both the first hole and the second hole, providing a reliable locking mechanism. This design prevents accidental detachment of the first temple from the second hinge part during wear hence enhances comfort and confidence to the user. Beneficially, the precise alignment of the second pin with the first hole and the second hole provides a reliable attachment between the first temple and the second hinge part. This minimizes the risk of the first temple becoming loose or dislodged over time hence enhances the durability of the eyewear apparatus. Moreover, the locking mechanism is simple and straightforward, facilitating easy attachment and detachment of the first temple as needed. Thus, the design of the locking mechanism can be adapted to accommodate different configurations of the first temple and the hinge, making it suitable for a variety of eyewear styles and designs.

A technical effect of integrating the locking mechanism comprising the second pin and corresponding holes is the establishment of a secure and stable connection between the first temple and the second hinge part of the eyewear apparatus. Moreover, the second pin and the corresponding holes provide an additional mechanical locking mechanism that enhances structural stability while maintaining ease of assembly and disassembly.

### DETAILED DESCRIPTION OF THE DRAWINGS

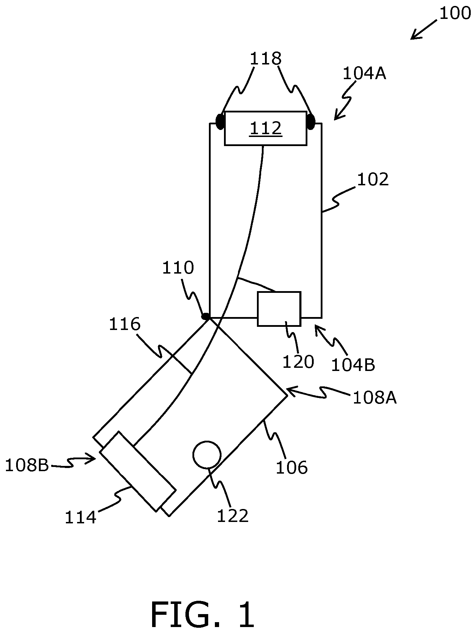

Referring to FIG. 1, there is illustrated a schematic illustration of a hinge **100,** in accordance with an embodiment of the present disclosure. The hinge **100** comprises a first hinge part **102** having a first end **104A** and a second end **104B,** a second hinge part **106** having a third end **108A** and a fourth end **108B,** a connecting member **110** for connecting the first hinge part **102** and the second hinge part **106,** a first electrical connector **112** at the first end **104A** and a second electrical connector **114** at the fourth end **108B,** an electrical conductor **116** passing through the first hinge part **102** and the second hinge part **106** for connecting the first electrical connector **112** to the second electrical connector **114,** and a sealing **118** arranged at least at the first end **104A,** wherein the sealing **118** is compressed in at least one of: an axial direction, a radial direction. The connecting member **110** is used for providing a first rotation point to allow rotation of the first hinge part **102** with respect to the second hinge part **106.**

Optionally, the hinge **100** comprises a charging interface **120,** wherein the charging interface **120** is located at the second end **104B** of the first hinge part **102** or at the third end **108A** of the second hinge part **106.**

Optionally, the charging interface **120** is electrically connected to the second electrical connector **114.** Optionally, the second hinge part **106** comprises a first hole **122.**

It may be understood by a person skilled in the art that the FIG. 1 includes a simplified structural representation of the hinge **100** for sake of clarity, which should not unduly limit the scope of the claims herein. The person skilled in the art will recognize many variations, alternatives, and modifications of embodiments of the present disclosure.

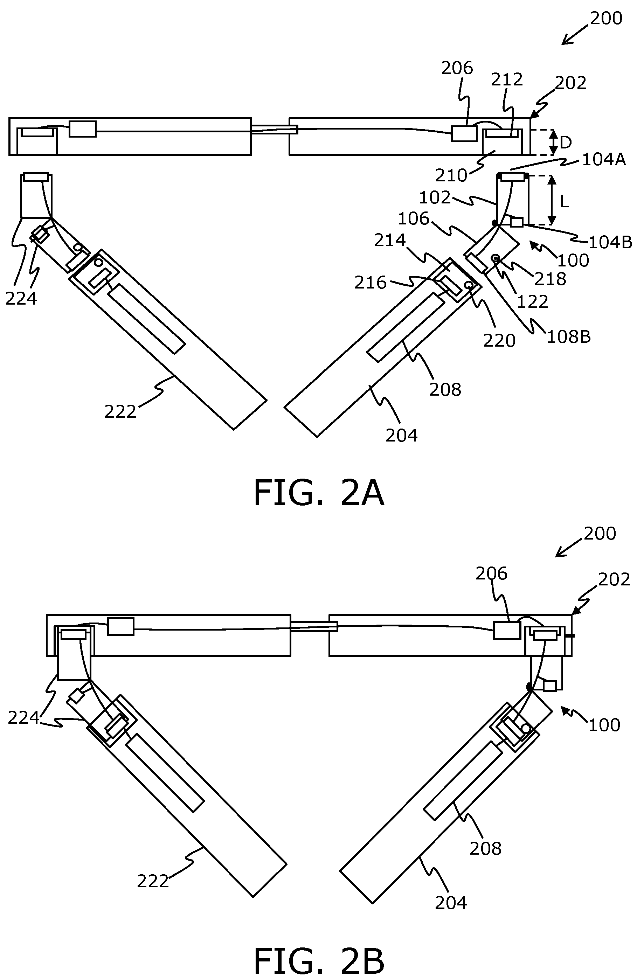

Referring to FIGs. 2A and 2B, illustrated are top views of an eyewear apparatus **200** that uses a hinge **100** of FIG. 1, wherein the FIG. 2A is unassembled and the FIG. 2B is assembled, in accordance with an embodiment of the present disclosure. In FIGs. 2A-B, the hinge **100** is a first hinge. In FIGs. 2A-B, the eyewear apparatus **200** comprises a frame **202,** a first temple **204,** the first hinge **100,** at least one electrical component (depicted as an electrical component **206)** embedded in the frame **202,** a power source **208** embedded in the first temple **204.** The first hinge **100** comprises both a first hinge part **102** and a second hinge part **106.** Optionally, the frame **202** comprises a first cavity **210** for receiving a first end **104A** of the first hinge part **102** to removably connect the first hinge part **102** to the frame **202,** and wherein a first receiving connector **212** is arranged in the first cavity **210** to electrically connect the first receiving connector **212** to the electrical component **206.**

Optionally, the first temple **204** comprises a second cavity **214** for receiving a fourth end **108B** of the second hinge part **106** to removably connect the second hinge part **106** to the first temple **204,** and wherein a second receiving connector **216** is arranged in the second cavity **214** to electrically connect the second receiving connector **216** to the power source **208.** Optionally, the first receiving connector **212** or the second receiving connector **216** is at the bottom of the first cavity **210** or the second cavity **214.** Optionally, a depth **D** of the first cavity **210** is 50 - 90 percent (%) of a length **L** of the first hinge part **102.** Optionally, there is a locking mechanism for the removable connection. The locking mechanism comprises a second pin **218** and a first hole **122** in the second hinge part **106** and a second hole **220** in the first temple **204** for receiving the second pin **218** to lock the first temple **204** to the second hinge part **106.** Optionally, the eyewear apparatus **200** further comprises a second temple **222** and a second hinge **224.**

In FIG. 2B, the eyewear apparatus **200** is assembled. Herein, the first cavity **210** of the frame **202** receives the first end **104A** of the first hinge part **102** to removably connect the first hinge part **102** to the frame **202.** Similarly, the second cavity **214** of the first temple **204** receives the fourth end **108B** of the second hinge part **106** to removably connect the second hinge part **106** to the first temple **204.** Then, the first hinge **100** removably connects the first temple **204** to the frame **202** and provides an electrical connection between the electrical component **206** and the power source **208.**

It may be understood by a person skilled in the art that the FIGs. 2A-B includes a simplified representation of the eyewear apparatus **200** for sake of clarity, which should not unduly limit the scope of the claims herein. The person skilled in the art will recognize many variations, alternatives, and modifications of embodiments of the present disclosure.

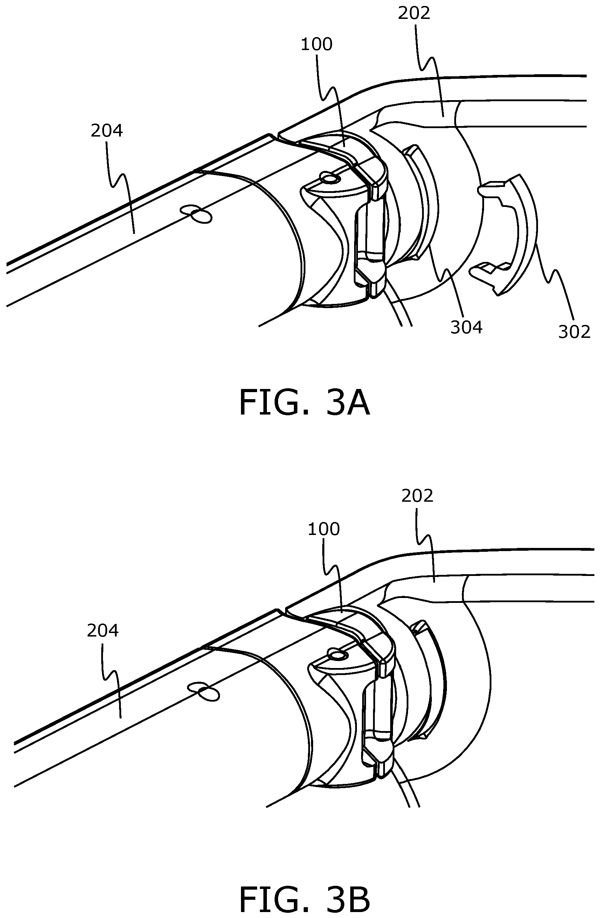

Referring to FIGs. 3A and 3B collectively, there are illustrated sectional views of a portion of an eyewear apparatus **200** of FIGs. 2A-B, in accordance with an embodiment of the present disclosure. In FIGs. 3A-B, the portion of the eyewear apparatus **200** comprises a frame **202,** a first temple **204,** and a first hinge **100.** Moreover, in FIGs. 3A-B, there is shown a locking mechanism of the frame **202** and the first temple **204** for the removable connection. In FIG. 3A, the locking mechanism comprises at least one locking clip (depicted as a locking clip **302)** and a receiving cavity **304** in the frame **202** for receiving the locking clip **302** to lock the first temple **204** to the frame **202.**

It may be understood by a person skilled in the art that the FIGs. 3A-B includes a simplified sectional view of the frame, the first temple and the first hinge of the eyewear apparatus **200** for sake of clarity, which should not unduly limit the scope of the claims herein. The person skilled in the art will recognize many variations, alternatives, and modifications of embodiments of the present disclosure.

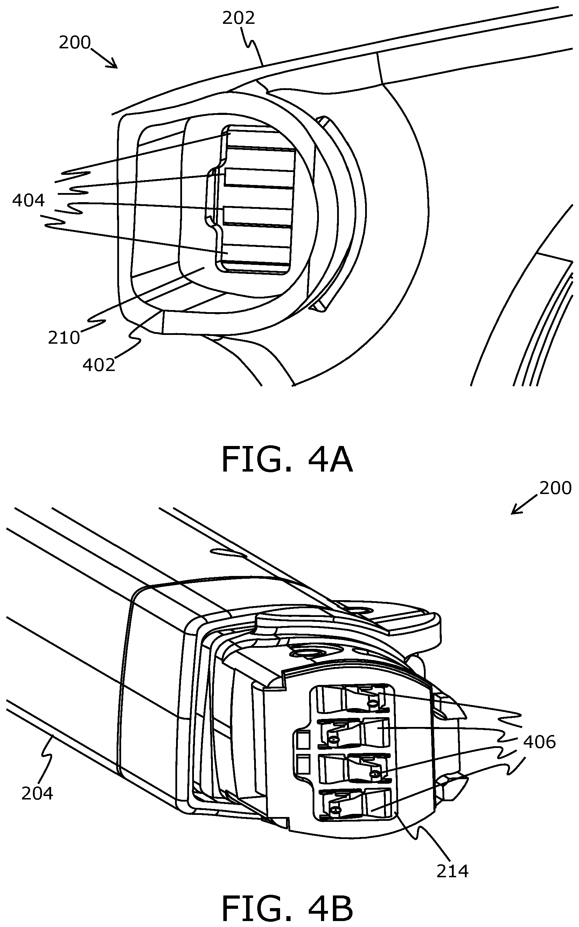

Referring to FIG. 4A, there is shown an internal view of a frame **202** comprised in an eyewear apparatus **200** of FIG. 2A and referring to FIG. 4B, there is shown a first temple **204** comprised in the eyewear apparatus **200** of FIG. 2A, in accordance with an embodiment of the present disclosure. In FIG. 4A, the frame **202** comprises a first cavity **210** for receiving a first end of a first hinge. The first cavity **210** is defined by an edge **402** extending from a surface of the frame **202.** Moreover, a first receiving connector (depicted as contact pads **404** of a printed circuit board) is exposed through the first cavity **210.**

In FIG. 4B, the first temple **204** comprises a second cavity **214,** wherein the first temple **204** is corresponding to the frame **202.** A second receiving connector (depicted as contact springs **406)** is arranged in the second cavity **214** to electrically connect the contact springs **406** to a power source (not shown for sake of brevity).

It may be understood by a person skilled in the art that the FIGs. 4A-B includes a simplified view of the first temple and internal view of the frame, of the eyewear apparatus **200** for sake of clarity, which should not unduly limit the scope of the claims herein. The person skilled in the art will recognize many variations, alternatives, and modifications of embodiments of the present disclosure.

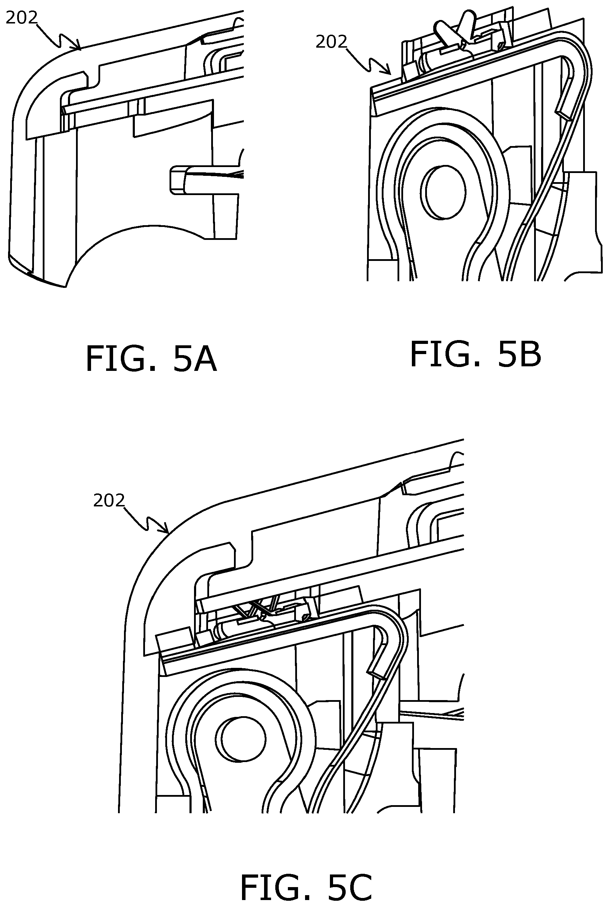

Referring to FIGs. 5A, 5B, and 5C, there are shown various views of an eyewear apparatus **200** of FIG. 2A, in accordance with an embodiment of the present disclosure. In FIGs. 5A-C, there is shown a cut-view of a frame **202,** wherein the cut-view represents an area where a first hinge is removably attached with the frame **202** of an eyewear apparatus **200.**

It may be understood by a person skilled in the art that the FIGs. 5A-C include a simplified view of the eyewear apparatus **200** for sake of clarity, which should not unduly limit the scope of the claims herein. The person skilled in the art will recognize many variations, alternatives, and modifications of embodiments of the present disclosure.

## Claims

1. A hinge (100) comprising:
a first hinge part (102) having a first end (104A) and a second end (104B);
a second hinge part (106) having a third end (108A) and a fourth end (108B);
a connecting member (110) for connecting the first hinge part and the second hinge part for providing a first rotation point to allow rotation of the first hinge part with respect to the second hinge part;
a first electrical connector (112) at the first end and a second electrical connector (114) at the fourth end;
an electrical conductor (116) passing through the first hinge part and the second hinge part for connecting the first electrical connector to the second electrical connector; and
a sealing (118) arranged at least at the first end, wherein the sealing is compressed in at least one of: an axial direction, a radial direction.

2. The hinge (100) according to claim 1, wherein the connecting member (110) is a first pin.

3. The hinge (100) according to any of the preceding claims, wherein the hinge further comprises a charging interface (120).

4. The hinge (100) according to claim 3, wherein the charging interface (120) is located at the second end (104B) or at the third end (108A).

5. The hinge (100) according to any of the claims 3 to 4, wherein the charging interface (120) is electrically connected to the second electrical connector (114).

6. An eyewear apparatus (200) comprising:
a frame (202);
a first temple (204);
a first hinge (100);
at least one electrical component (206) embedded in the frame; and
a power source (208) embedded in the first temple;
wherein the first hinge connects the first temple to the frame and provides electrical connection between the at least one electrical component and the power source.

7. The eyewear apparatus (200) according to claim 6, wherein the first hinge (100) is a hinge according to any of claims 1-5.

8. The eyewear apparatus (200) according to any of claims 6 to 7, wherein the frame (202) comprises a first cavity (210) for receiving the first end (104A) of the first hinge part (102) to removably connect the first hinge part to the frame and wherein a first receiving connector (212, 404) is arranged in the first cavity to electrically connect the first electrical connector (112) to the at least one electrical component (206).

9. The eyewear apparatus (200) according to any of claims 7 to 8, wherein the first temple (204) comprises a second cavity (214) for receiving the fourth end (108B) of the second hinge part (106) to removably connect the second hinge part to the first temple and wherein a second receiving connector (216, 406) is arranged in the second cavity to electrically connect the second receiving connector to the power source (208).

10. The eyewear apparatus (200) according to any of claims 8 to 9, wherein the first receiving connector (212, 404) or the second receiving connector (216, 406) is at the bottom of the first cavity (210) or the second cavity (214).

11. The eyewear apparatus (200) according to any of claims 8 to 10, wherein there is a locking mechanism for the removable connection.

12. The eyewear apparatus (200) according to claim 11, wherein the locking mechanism is a clip-locking mechanism, the clip-locking mechanism comprising at least one locking clip (302) and receiving cavity (304) in the frame (202) for receiving the locking clip to lock the first temple (204) to the frame.

13. The eyewear apparatus (200) according to any of claims 11 to 12, wherein the locking mechanism comprises a second pin (218) and a first hole (122) in the second hinge part (106) and a second hole (220) in the first temple (204) for receiving the second pin to lock the first temple to the second hinge part.

14. The eyewear apparatus (200) according to any of claims 8 to 13, wherein a crosscut of the first cavity (210) or the second cavity (214) is one of the following: triangle, square, rectangle, pentagon, hexagon.

15. The eyewear apparatus (200) according to any of claims 7 to 14, wherein a depth (D) of the first cavity (210) is 50 - 90% of a length (L) of the first hinge part (102).

16. The eyewear apparatus (200) according to any of claims 6 to 15, wherein the eyewear apparatus further comprises a second temple (222) and a second hinge (224).
